# EUROPÄISCHE PATENTSCHRIFT

(11) **EP 0 648 950 B1**
(45) Veröffentlichungstag und Bekanntmachung des Hinweises auf die Patenterteilung: **05.03.1997**
(21) Anmeldenummer: 94109537.4
(22) Anmeldetag: 21.06.1994
(51) Int. Cl.: F16D 13/64

(54) **Kupplungsscheibe für eine Kraftfahrzeug - Reibungskupplung**
Clutch disc for an automotive vehicle friction clutch
Disque d'embrayage pour un embrayage à friction de véhicule automobile

(30) Priorität: 15.10.1993 DE 4335208
(43) Veröffentlichungstag der Anmeldung: 19.04.1995
(73) Patentinhaber: FICHTEL & SACHS AG, D-97424 Schweinfurt (DE)
(72) Erfinder: Lutz, Dieter, Dr. Dipl.-Ing., D-97422 Schweinfurt (DE); Hörth, Franz-Josef, Dr., D-97422 Schweinfurt (DE); Heide, Hartmut, D-97475 Zeil (DE); Göbel, Hilmar, D-97506 Grafenrheinfeld (DE); Littell, Alan E. L., SACHS AUTOMOTIVE Ltda., CEP 09890, C. Postal 281, Sao Paulo (BR); Vonderau, Josef, Dipl.-Ing., D-97616 Bad Neustadt (DE); Heid, Armin, D-97422 Schweinfurt (DE); Scheer, Erich, Dipl.-Ing. (FH), D-97279 Prosselsheim (DE)

(56) Entgegenhaltungen:
- EP-A- 0 166 640
- DE-A- 3 344 443
- DE-A- 3 519 245
- DE-A- 4 010 543
- DE-A- 4 226 763
- US-A- 2 222 507

## Beschreibung

Die Erfindung bezieht sich auf eine Kupplungsscheibe entsprechend dem Oberbegriff des Hauptanspruches.

Kupplungsscheiben dieser Bauart sind beispielsweise aus der deutschen Offenlegungsschrift 40 10 543 bekannt. Es hat sich allerdings herausgestellt, daß die Reibringe nach dem Stand der Technik die in sie gesetzten Erwartungen nicht in dem erhofften Maß erfüllen. So ist beispielsweise die angestrebte Drehzahlfestigkeit nicht in allen Fällen gewährleistet.

Es ist daher Aufgabe der vorliegenden Erfindung, ausgehend von dem o.g. Stand der Technik, die Reibringe dahingehend zu verbessern, daß sie einerseits eine ausreichende Drehzahlfestigkeit aufweisen und andererseits möglichst sparsam mit dem Reibmaterial umgehen.

Diese Aufgabe wird erfindungsgemäß durch das Kennzeichen des Hauptanspruches gelöst. Die Gewichts- bzw. Materialeinsparung der Reibringe wird vor allem auf den Bereich der Vernietung konzentriert. Es hat sich herausgestellt, daß selbst bei großflächigen, muldenförmigen Vertiefungen der Rest der Reibfläche ausreicht für eine akzeptable Lebensdauer. Wesentlich ist jedenfalls, daß die Verbindungsflächen zwischen dem Nietkopfboden und der Reibfläche stark schräg ausgebildet sind oder gewölbt mit großem Radius verlaufen, so daß möglichst wenig Unstetigkeitsstellen im Verlauf des Reibringes entstehen. Dadurch ist die Gefahr der Zerstörung bei hohen Drehzahlen stark gemindert.

Es wird weiterhin vorgeschlagen, daß der durch die Verbindungsflächen und die Reibfläche gebildete Randbereich in sich geschlossen ist. Dies bedeutet, daß jede muldenförmige Vertiefung rundherum von Reibfläche umgeben ist. Damit ist gewährleistet, daß der Reibring in radialer Richtung bei eingerücktem Zustand der Kupplung nicht durch ein Biegemoment belastet wird.

Dabei kann die Fläche des Nietkopfbodens deutlich größer ausgeführt sein als die Fläche des Nietkopfes und die durch Nietkopfboden und Verbindungsflächen gebildeten Randbereiche eine ähnliche Form aufweisen wie der Randbereich zwischen Verbindungsflächen und Reibfläche. Auf diese Weise kann relativ viel Reibmaterial eingespart werden, was sowohl eine preiswerte Herstellung gewährleistet als auch ein niedriges Gewicht des Reibringes realisiert.

Vorzugsweise wird vorgeschlagen, daß beide Randbereiche im wesentlichen rechteckige oder quadratische Form aufweisen und die Ecken ausgerundet sind. Eine solche Form bringt eine günstige Ausnutzung sowohl für die muldenförmigen Vertiefungen als auch für die Restreibfläche.

Es wird weiterhin vorgeschlagen, daß die beiden umfangsmäßig beabstandeten Seiten der Randbereiche im wesentlichen radial verlaufen und die beiden radial übereinander angeordneten Seiten der Randbereiche kreisbogenförmig um die Drehachse verlaufen. Eine solche Ausbildung bietet einen guten Kompromiß einerseits im Hinblick auf volumenmäßig große muldenförmige Vertiefungen zur Gewichts- und Materialeinsparung und andererseits im Hinblick auf eine ausreichende, relativ großflächige Rest-Reibfläche.

Nach einem weiteren Merkmal der Erfindung wird vorgeschlagen, daß auch auf der belagträgernahen Auflagefläche der Reibringe muldenförmige Vertiefungen angeordnet sind, die in den Zwischenräumen angeordnet sind, die von den muldenförmigen Vertiefungen in der Reibfläche ausgespart sind. Damit ist eine gegenseitige Überschneidung der muldenförmigen Vertiefungen beider Seiten der Reibringe ausgeschlossen, wodurch die Belastung der Reibringe nicht unnötig erhöht wird. Gleichzeitig ist es möglich, auf diese Weise zusätzlich Materialeinsatz und Gewicht einzusparen.

Es wir weiterhin vorgeschlagen, daß die muldenförmigen Vertiefungen auf beiden Seiten der Reibringe ähnliche geometrische Formen aufweisen mit in sich geschlossenen Randbereichen, die eine im wesentlichen rechteckige oder quadratische Form mit abgerundeten Ecken aufweisen, so wie mit im wesentlichen radial verlaufenden, umfangsmäßig beabstandeten Seiten. Damit können sich die muldenförmigen Vertiefungen auf beiden Seiten in Umfangsrichtung mehr oder weniger nahtlos aneinander reihen.

Es wird weiterhin vorgeschlagen, daß die radial verlaufenden Seiten der Randbereiche der muldenförmigen Vertiefungen auf beiden Seiten der Reibringe umfangsmäßig einen Minimalabstand aufweisen. Auf diese Weise ist sichergestellt, daß sich die muldenförmigen Vertiefungen umfangsmäßig nicht überschneiden, so daß zumindest an dieser Stelle die volle Materialstärke erhalten bleibt. In diesem Bereich ist somit eine axiale Kraftabstützung über die gesamte Materialstärke direkt möglich.

Nach einem weiteren Merkmal der Erfindung sind sämtliche Befestigungsniete auf einen mittleren Radius angeordnet und die muldenförmigen Vertiefungen umfangsmäßig einander abwechselnd vorgesehen und deren beide radial übereinander liegend angeordnete Seiten der Randbereiche verlaufen im geringen Abstand von den Konturen der Reibringe. Eine solche Anordnung bringt einerseits einen großen Gewichtsvorteil durch die Vertiefungen mit sich und zum anderen ist eine relativ großflächige Auflage sowohl auf der Reibseite als auch auf der belagträgernahen Auflagefläche möglich. Somit ist die Gefahr der ungleichmäßigen Belastung bei eingerückter Kupplung gebannt.

Die Erfindung wird anschließend anhand eines Ausführungsbeispieles näher erläutert. Es zeigen im einzelnen:
- Fig. 1: den Teillängsschnitt durch ein Belagträgerpaar mit angenieteten Reibringen;
- Fig. 2: einen Schnitt B-B durch einen Reibring;
- Fig. 3: die Teilansicht eines Reibringes entsprechend Fig. 2;
- Fig. 4: den Schnitt A-A durch einen Reibring entsprechend Fig. 3;
- Fig. 5: die Teilansicht eines weitren Reibringes.

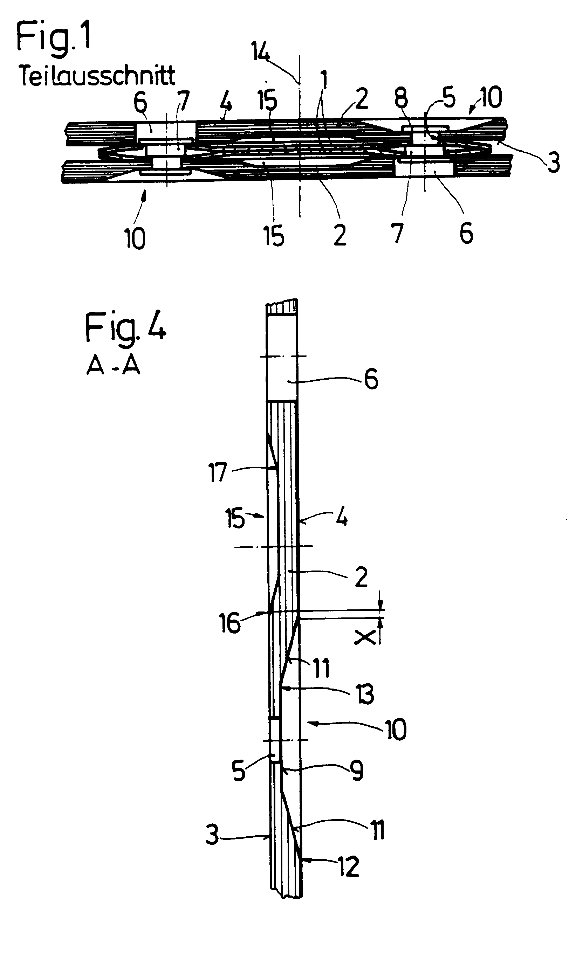

Der Teillängsschnitt entsprechend Fig. 1 ist durch eine Kupplungsscheibe gelegt, wobei er bogenförmig um die Drehachse der Kupplungsscheibe gelegt ist und durch zwei wechselseitig verbaute Befestigungsniete 7 verläuft. Es sind hierbei die beiden Belagträger 1 zu erkennen, die in nicht mehr dargestellter Weise drehfest mit der Nabe einer Kupplungsscheibe verbunden sind. Sie verlaufen umfangsmäßig im radialen Abstand zur Drehachse 14 der Kupplungsscheibe und zwar senkrecht zu dieser. Sie weisen in ihren jeweiligen umfangsmäßigen Endbereichen Wellenberge auf, die der Federung der beiden Reibringe 2 dienen. Nach axial außen hin sind die beiden Belagträger mit jeweils einem Reibring 2 versehen. Die gegenseitige Verbindung erfolgt dadurch, daß in einem Reibring 2 durch eine Durchgangsöffnung 5 ein Befestigungsniet 7 hindurchgeführt ist, der durch Bildung eines Nietkopfes 8 eine feste Verbindung mit dem zugehörigen Belagträger 1 herstellt. Der Befestigungsniet 7 ist axial von dem Nietkopf 8 wegweisend verlängert und er durchdringt in diesem Bereich eine Öffnung in den gegenüberliegenden Belagträger 1 und hintergreift diese Öffnung ebenfalls mit einem Nietkopf. Die beiden Befestigungsniete 7 für jeweils ein Paar von Belagträger 1 sind wechselseitig verbaut, so daß einmal der eine Reibung 2 mit dem einen Belagträger 1 festverbunden ist und der Befestigungsniet 7 auf der gegenüberliegenden Seite in einer Öffnung 6 des anderen Reibringes beweglich angeordnet ist und umgekehrt. Die beiden Reibringe liegen jeweils mit den einander zugekehrten belagträgernahen Auflageflächen 3 auf dem entsprechenden Belagträger 1 auf, nach axial außen hin weisen sie Reibflächen 4 auf, die jeweils belagträgerfern angeordnet sind. In Betrieb einer Kupplungsscheibe werden die Reibringe 2 zwischen einem Schwungrad und einer Anpreßplatte während der Drehmomentübertragung axial eingespannt, wobei die Belagträger mit ihren Wellenbergen teilweise zusammengepreßt werden. Um das Maß dieses Federweges bewegen sich die Nietköpfe der Befestigungsniete 7 in den Öffnungen 6 in Richtung auf die entsprechende Reibfläche 4 zu.

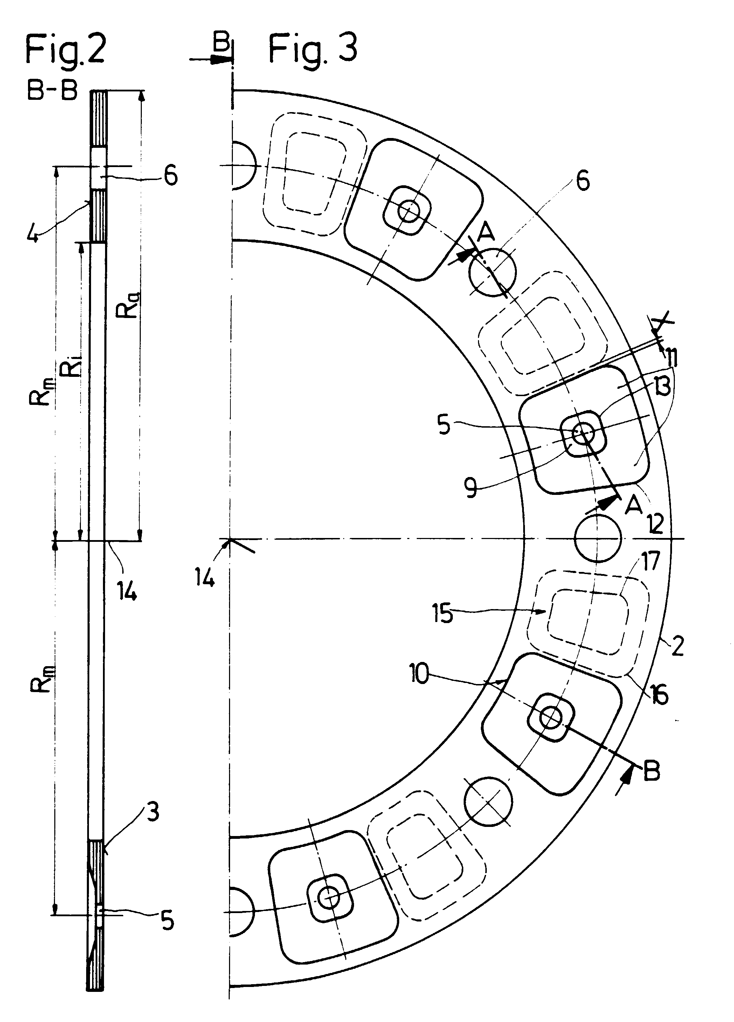

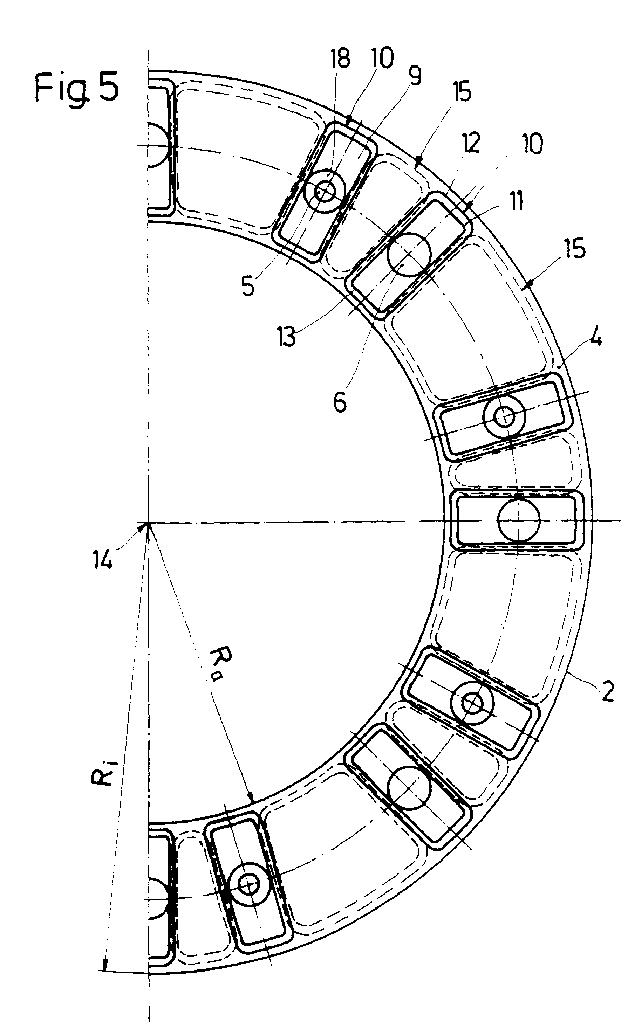

Die Fig. 2 - 4 zeigen eine bevorzugte Ausführungsform eines Reibringes 2, wie er in Fig. 1 in doppelter Ausfertigung zur Verwendung kommt. Der Reibring 2 weist eine innere Kontur mit Radien Rᵢ und eine äußere Kontur mit Radius Rₐ auf. Diese beiden Radien gehen von der Drehachse 14 aus, die durch die komplette Kupplungsscheibe unter Verwendung der Reibringe 2 gebildet ist. Auf einen mittleren Radius Rₘ, der im wesentlichen zwischen den beiden Radien Rᵢ und Rₐ liegt, sind die Durchgangsöffnungen 5 und die Öffnungen 6 angebracht. Ihre umfangsmäßige Verteilung wird noch anhand der Fig. 3 und 4 näher erläutert. Zu erkennen ist in Fig. 2 noch die Reibfläche 4 sowie die gegenüberliegend angeordnete Auflagefläche 3.

Wie insbesondere aus den Fig. 3 und 4 ersichtlich ist, sind sowohl in die Reibfläche 4 als auch in die Auflagefläche 3 muldenförmige Vertiefungen 10 bzw. 15 eingebracht. Die muldenmförmigen Vertiefungen 10 sind in die Reibfläche 4 eingebracht und zwar konzentrisch zu den Durchgangsöffnungen 5.

Dabei ist an der dünnsten Stelle des Reibringes 2 ein Nietkopfboden 9 vorgesehen, der parallel zur Reibfläche 4 bzw. zur Auflagefläche 3 verläuft und der gleichzeitig der Nietkopfboden ist. Auf diesen Boden 9 kommt der Nietkopf 8 des Besfestigungsniets 7 zur Anlage. Von diesem Boden 9 erstrecken sich nun Verbindungsflächen 11, die schräg verlaufen und die in der Reibfläche 4 enden. Die Verbindungsflächen 11 können dabei jedoch auch gewölbt mit einem großen Radius verlaufend ausgebildet sein. In jedem Fall ist beim Übergang von den Verbindungsflächen 11 in den Boden 9 hinein eine Ausrundung vorgesehen. Beim Übergang vom Boden 9 in die Verbindungsflächen 11 und beim Übergang von den Verbindungsflächen 11 in die Reibfläche 4 entstehen jeweils Randbereiche 12 bzw. 13, die sich geometrisch ähneln und die so ausgelegt sind, daß nach radial außen und nach radial innen hin ein umfangsmäßig im wesentlichen gleichbleibender Streifen der Reibfläche 4 erhalten bleibt und die beiden umfangsmäßig beabstandeten Seiten der Randbereiche 12,13 etwa radial bzw. strahlenförmig verlaufen und die Ecken jeweils ausgerundet sind. Damit ist ein sanfter Übergang vom Boden 9 zur Reibfläche 4 gewährleistet, der die Struktur des Reibrings 2 nur unwesentlich schwächt und dadurch die Strukturfestigkeit insbesondere im Hinblick auf hohe Drehzahlen in vorteilhafter Weise erhalten ist. Aus den Fig. 3 und 4 ist auch zu erkennen, an welcher Stelle und in welcher Form die umlaufenden Vertiefungen 15 in die Auflagefläche 3 eingebracht sind. Die Vertiefungen 15 weisen ähnliche Form auf wie die Vertiefungen 10 wobei ihre radial verlaufenden Kanten ebenfalls etwa strahlenförmig nach außen verlaufen und so gegenüber den radial verlaufen Kanten der Vertiefungen 10 angeordnet sind, daß umfangsmäßig ein Mindestabstand X gewährleistet ist. Bei der Verwendung von Belagträgern entsprechend der Fig. 1 folgt somit in Umfangsrichtung bei jedem Reibring 2 auf eine Vertiefung 10 eine Vertiefung 15 sowie ein Bereich, der keine Vertiefungen aufweist, in dem jedoch eine Öffnung 6 angebracht ist zur Durchführung eines Nietwerkzeugs zum Vernieten der Befestigungsniete 7.

Eine Variante eines Reibrings 2 ist in Fig. 5 in Teilansicht wiedergegeben. Hierbei sind in der Reibfläche 4 Vertiefungen 10 sowohl im Bereich der Durchgangsöffnung 5 als auch der Öffnungen 6 vorgesehen. Umfangsmäßig zwischen den muldenförmigen Vertiefungen 10 in der Reibfläche 4 sind auf der Rückseite, der belagträgernahen Auflagefläche 3 ebenfalls muldenförmige Vertiefungen 15 vorgesehen, die die umfangsmäßigen Zwischenräume im wesentlichen ausfüllen. Dabei weisen die muldenförmigen Vertiefungen 10 in der Reibfläche 4 eine im wesentlichen rechteckige Form auf, während die muldenförmige Vertiefungen 15 auf der Rückseite in Anpassung an die Vertiefungen 10 umfangsmäßig beabstandete etwas strahlenförmig verlaufende Begrenzungen aufweisen. Jede Vertiefung 10,15 weist einen Boden 9 auf, der parallel zur Reibfläche 4 zurückversetzt verläuft. Im vorliegenden Fall ist im Vernietungsbereich ein Nietkopfboden 18 vorgesehen, der nochmals geringfügig gegenüber dem Boden 9 tiefer gesetzt ist. Es ist jedoch auch möglich, Nietkopfboden 18 und Boden 9 in einer gemeinsamen Ebene anzuordnen. Die Verbindungsflächen 11 zwischen dem Boden 9 und der Reibfläche bilden mit ihren Randbereichen 12 und 13 die bereits beschriebene äußere Form der Vertiefung 10 und 15. Dabei bleibt von der Reibfläche 4 nach radial außen und nach radial innen hin bezogen auf die Kontur der Reibringe mit den Radien Rᵢ und Rₐ jeweils ein durchgehender umflaufender Teilbereich der Reibfläche 4 erhalten.

Durch eine Anordnung entsprechend den Fig. 1 - 5 ist sichergestellt, daß die Reibringe im Bereich ihrer Auflage auf den Belagträgern 1 eine durchgehende, allenfalls von den Öffnungen 5 bzw. 6 unterbrochene Auflage aufweisen und in den Bereichen der Belagträger 1, die keiner Federung unterworfen sind, die Vertiefungen 15 angeordnet sind. Die Vertiefungen auf der Seite der Reibflächen 4 sind jeweils im Bereich der Befestigungsniete vorgesehen und sämtliche Vertiefungen sind mit Schrägflächen und weichen Übergängen versehen, so daß von diesen keine Strukturschwächung ausgeht. Die Verringerung der aktiven Reibfläche durch die Vertiefungen 10 ist völlig unbedenklich und schränkt die Lebensdauer einer solchen Kupplungsscheibe nicht ein.

## Patentansprüche

1. Kupplungsscheibe für eine Kraftfahrzeugreibungskupplung, umfassend eine Nabe zum Aufsetzen auf eine um eine Drehachse drehbare Getriebewelle, Belagträger (1), die direkt oder unter Zwischenschaltung eines Torsionsschwingungsdämpfers an der Nabe befestigt sind und welche nach jeder axialen Seite hin einen Reibring (2) tragen mit einer belagträgernahen Auflagefläche (3), einer belagträgerfernen Reibfläche (4), einer inneren Kontur mit Radius Rᵢ und einer äußeren Kontur mit Radius Rₐ, wobei jeder Reibring (2) sowohl mit von Nietkopfböden (18) ausgehenden Durchgangsöffnungen (5) für Befestigungsniete (7) zwischen Reibring (2) und Belagträger (1) als auch mit Öffnungen (6) zum Durchtritt von Nietwerkzeugen versehen ist und wobei jeder Nietkopf (8) in einer muldenförmigen Vertiefung (10) des Reibringes (2) angeordnet ist, die einen Boden (9) aufweist, der parallel zur Reibfläche (4) verläuft, dadurch gekennzeichnet, daß die Verbindungsflächen (11) zwischen Boden (9) und Reibfläche (4) schräg verlaufen oder mit einer Wölbung versehen sind.

2. Kupplungsscheibe nach Anspruch 1, dadurch gekennzeichnet, daß der Boden (9) und der Nietkopfboden (18) in einer Ebene angeordnet sind.

3. Kupplungsscheibe nach Anspruch 1 oder 2, dadurch gekennzeichnet, daß die Verbindungsflächen (11) stark schräg oder gewölbt mit großem Radius verlaufen.

4. Kupplungsscheibe nach Anspruch 3, dadurch gekennzeichnet, daß der durch die Verbindungsflächen (11) und die Reibfläche (4) gebildete Randbereich (12) in sich geschlossen ist.

5. Kupplungsscheibe nach den Ansprüchen 3 und 4, dadurch gekennzeichnet, daß zwischen den einzelnen radial außen bzw. radial innen verlaufenden Bereichen der Randbereiche (12) und der inneren (Rᵢ) bzw. äußeren Kontur (Rₐ) des Reibringes (2) ein umlaufender, umfangsmäßig nicht unterbrochener Reibflächenbereich angeordnet ist.

6. Kupplungsscheibe nach den Ansprüchen 3 bis 5, dadurch gekennzeichnet, daß die radial außen bzw. radial innen verlaufenden Bereiche der Verbindungsflächen (11) mit ihren Randbereichen (12) kreisbogenförmig um die Drehachse (4) verlaufen.

7. Kupplungsscheibe nach den Ansprüchen 3 bis 6, dadurch gekennzeichnet, daß der Randbereich (12) im wesentlichen rechteckige bzw. quadratische Form aufweist, mit im wesentlichen radial verlaufenden umfangsmäßig beabstandeten Seiten und die Ecken ausgerundet sind.

8. Kupplungsscheibe nach den Ansprüchen 3 bis 7. dadurch gekennzeichnet, daß die Öffnungen (6) zum Durchtritt von Nietwerkzeugen ebenfalls in einer muldenförmigen Vertiefung (10) angeordnet sind.

9. Kupplungsscheibe nach den Ansprüchen 3 bis 8, dadurch gekennzeichnet, daß in der belagträgernahen Auflagefläche (3) des Reibringes (2) ebenfalls muldenförmige Vertiefungen (15) angeordnet sind, die in den umfangsmäßigen Zwischenräumen der muldenförmigen Vertiefungen (10) der Reibfläche (4) angeordnet sind.

10. Kupplungsscheibe nach den Ansprüchen 3 bis 9, dadurch gekennzeichnet, daß die muldenförmigen Vertiefungen (10,15) auf beiden Seiten der Reibringe (2) ähnliche geometrische Form aufweisen mit in sich geschlossenen Randbereichen (12,16;13,17,) die eine im wesentlichen rechteckige oder quadratische Form mit ausgerundeten Ecken aufweisen sowie mit im wesentlichen radial verlaufenden, umfangsmäßig beabstandeten Seiten.

11. Kupplungsscheibe nach den Ansprüchen 3 bis 10, dadurch gekennzeichnet, daß die radial verlaufenden Seiten der Randbereiche (12,16) der muldenförmigen Vertiefungen (10,15) umfangsmäßig einen Minimalabstand (X) aufweisen.

12. Kupplungsscheibe nach den Ansprüchen 3 bis 11, wobei Belagträger vorgesehen sind, die in ihren umfangsmäßigen Endbereichen je einen Wellenberg zur axialen Federung der Reibringe aufweisen und in jedem Wellenberg ein Befestigungsniet auf einen mittleren Radius angeordnet ist, dadurch gekennzeichnet, daß jeder Reibring (2) umfangsmäßig aufeinander folgend einen Bereich mit einer muldenförmigen Vertiefung (10) in der Reibfläche (4) und einen Bereich mit einer muldenförmigen Vertiefung (15) in der Auflagefläche (3) aufweist und beide Reibringe (2) so verbaut sind, daß sich die muldenförmigen Vertiefungen (15) in der Auflagefläche (3) axial gegenüber liegen.

13. Kupplungsscheibe nach Anspruch 12, dadurch gekennzeichnet, daß sämtliche muldenförmigen Vertiefungen (10,15) sowie die Öffnungen (5,6) ohne spanabhebende Bearbeitung eingepreßt sind.

## Claims

1. Clutch plate for a motor vehicle friction clutch, comprising a hub for mounting on a gearbox shaft rotatable about an axis, lining carriers (1) which are secured to the hub directly or with the interposition of a torsional vibration damper and which carry on each axial face a friction ring (2) with an engaging face (3) nearest the lining carrier, a friction face (4) furthest from the lining carrier, an inner profile of radius Rᵢ and an outer profile of radius Rₐ, each friction ring (2) being provided with clearance openings (5) leading from rivet head seatings (18) for attachment rivets (7) between friction ring (2) and lining carrier (1) and also with openings (6) for the passage of riveting tools, and each rivet head (8) being arranged in a trough-shaped recess (10) in the friction ring (2) having a seating (9) which extends parallel to the friction face (4), characterised in that the connecting surfaces (11) between seating (9) and friction face (4) extend in an inclined direction or with curvature.

2. Clutch plate according to claim 1, characterised in that the seating (9) and the rivet head seating (18) are arranged in one plane.

3. Clutch plate according to claim 1 or 2, characterised in that the connecting surfaces are sharply inclined or of large-radius curvature.

4. Clutch plate according to claim 3, characterised in that the edge region (12) formed by the connecting surfaces (11) and the friction face (4) is closed in itself.

5. Clutch plate according to claims 3 and 4, characterised in that a surrounding circumferentially uninterrupted friction face region is arranged between the individual radially outwardly and radially inwardly extending regions of the edge regions (12) and the inner (Rᵢ) and outer (Rₐ) profile of the friction ring (2).

6. Clutch plate accordingly to claims 3 to 5, characterised in that the radially outwardly and radially inwardly extending regions of the connecting faces (11) extend with their edge regions (12) arcuately about the axis of rotation (4).

7. Clutch plate according to claims 3 to 6 characterised in that the edge region has a substantially rectangular or square outline with substantially radially extending circumferentially spaced sides and the corners rounded off.

8. Clutch plate according to claims 3 to 7, characterised in that the openings (6) for the passage of riveting tools are likewise arranged in a trough-shaped recess (10).

9. Clutch plate according to claims 3 to 8, characterised in that trough-shaped recesses (15) are likewise arranged in the engaging face (3) of the friction ring (2) which is nearest the lining carrier and these recesses are arranged in the circumferential intermediate spaces between the trough-shaped recesses (10) in the friction face (4).

10. Clutch plate according to claims 3 to 9, characterised in that the trough-shaped recesses (10, 15) on the two faces of the friction ring (2) are of similar geometric shape with edge regions (12, 16; 13, 17) closed in themselves and of substantially rectangular or square outline with rounded corners, as well as substantially radially extending circumferentially spaced-apart sides.

11. Clutch plate according to claims 3 to 10, characterised in that the radially extending sides of the edge regions (12, 16) of the trough-shaped recesses (10, 15) have a minimal circumferential spacing (X).

12. Clutch plate according to claims 3 to 11, there being provided lining carriers which have in their circumferential end regions a respective wave peak for axially springing the friction rings and an attachment rivet being mounted on an intermediate radius in each wave peak, characterised in that each friction ring (2) has circumferentially in sequence a region with a trough-shaped recess (10) in the friction face (4) and a region with a trough-shaped recess (15) in the engaging face (3) and the two friction rings (2) are installed in such a way that the trough-shaped recesses (15) in the engaging faces (3) lie axially opposite one another.

13. Clutch plate according to claim 12, characterised in that all the trough-shaped recesses (10, 15) as well as the openings (5, 6) are formed by pressing in without any material-removing machining work.

## Revendications

1. Disque d'embrayage pour un embrayage à friction de véhicule automobile, comportant un moyeu destiné à être mis en place sur un arbre de transmission en rotation autour d'un axe de rotation, comportant des supports de garniture (1) qui sont fixés directement sur le moyeu, ou avec interposition d'un amortisseur d'oscillation de torsion, et qui supportent vers chaque côté axial un anneau de friction (2) par une surface d'appui (3) disposée près des supports de garniture, comportant une surface de friction (4) éloignée des supports de garniture, un contour intérieur présentant le rayon Rᵢ et un contour extérieur présentant le rayon Rₐ, dans lequel chaque anneau de friction (2) est pourvu d'ouvertures de passage (5) qui partent depuis des fonds de tête de rivet (18) pour des rivets de fixation (7) entre l'anneau de friction (2) et le support de garniture (1), et également d'ouvertures (6) pour le passage d'outils de rivetage, et dans lequel chaque tête de rivet (8) est agencée dans une dépression (10) en forme de creux de l'anneau de friction (2), laquelle présente un fond (9) qui s'étend parallèlement à la surface de friction (4), caractérisé en ce que les surfaces de liaison (11) entre le fond (9) et la surface de friction (4) s'étendent en oblique ou sont pourvues d'un bombement.

2. Disque d'embrayage selon la revendication 1, caractérisé en ce que le fond (9) et le fond de tête de rivet (18) sont agencés dans le même plan.

3. Disque d'embrayage selon l'une ou l'autre des revendications 1 et 2, caractérisé en ce que les surfaces de liaison (11) s'étendent fortement en oblique ou bien avec un bombement à grand rayon.

4. Disque d'embrayage selon la revendication 3, caractérisé en ce que la région de bordure (12) formée par les surfaces de liaison (11) et la surface de friction (4) est refermée en elle-même.

5. Disque d'embrayage selon les revendications 3 et 4, caractérisé en ce qu'il est prévu, entre les régions individuelles s'étendant radialement vers l'extérieur ou radialement vers l'intérieur des régions de bordure (12) et le contour intérieur (Rᵢ) ou extérieur (Rₐ) de l'anneau de friction (2), une région de surface de friction périphérique qui n'est pas interrompue dans le sens périphérique.

6. Disque d'embrayage selon les revendications 3 à 5, caractérisé en ce que les régions s'étendant radialement à l'extérieur ou radialement à l'intérieur des surfaces de liaison (11) s'étendent par leur régions de bordure (12) en forme d'arc de cercle autour de l'axe de rotation (4).

7. Disque d'embrayage selon les revendications 3 à 6, caractérisé en ce que la région de bordure (12) présente une forme sensiblement rectangulaire ou carrée qui présente des faces écartées dans le sens périphérique et s'étendant sensiblement radialement, et en ce que les coins sont arrondis.

8. Disque d'embrayage selon les revendications 3 à 7, caractérisé en ce que les ouvertures (6) pour le passage d'outils de rivetage sont également agencées dans une dépression (10) en forme de creux.

9. Disque d'embrayage selon les revendications 3 à 8, caractérisé en ce qu'il est prévu dans la surface d'appui (3) de l'anneau de friction (2), qui est située près des supports de garniture, des dépressions (15) également en forme de creux qui sont agencées dans les intervalles dans le sens périphérique des dépressions (10) en forme de creux de la surface de friction (4).

10. Disque d'embrayage selon les revendications 3 à 9, caractérisé en ce que les dépressions (10, 15) en forme de creux présentent, sur les deux côtés des anneaux de friction (2), une forme géométrique similaire présentant des régions de bordure (12, 16 ; 13, 17) refermées en elles-mêmes qui présentent une forme sensiblement rectangulaire ou carrée avec des coins arrondis et des faces sensiblement radiales écartées dans le sens périphérique.

11. Disque d'embrayage selon les revendications 3 à 10, caractérisé en ce que les faces radiales des régions de bordure (12, 16) des dépressions (10, 15) en forme de creux présentent une distance minimum (X) dans le sens périphérique.

12. Disque d'embrayage selon les revendications 3 à 11 dans lequel sont prévus des supports de garniture qui présentent dans leurs régions d'extrémité dans le sens périphérique une bosse respective pour l'amortissement axial des anneaux de friction, et dans lequel est agencé un rivet de fixation sur un rayon médian dans chaque bosse, caractérisé en ce que chaque anneau de friction (2) présente dans le sens périphérique et en succession une région présentant une dépression (10) en forme de creux dans la surface de friction (4), et une région présentant une dépression (15) en forme de creux dans la surface d'appui (3), et en ce que les deux anneaux de friction (2) sont montés de telle sorte que les dépressions (15) en forme de creux dans la surface d'appui (3) sont situées axialement en vis-à-vis.

13. Disque d'embrayage selon la revendication 12, caractérisé en ce que toutes les dépressions (10, 15) en forme de creux ainsi que les ouvertures (5, 6) sont réalisées par pressage sans usinage par enlèvement de matière.
